# EUROPÄISCHE PATENTSCHRIFT

(11) **EP 1 343 617 B1**
(45) Veröffentlichungstag und Bekanntmachung des Hinweises auf die Patenterteilung: **26.04.2006**
(21) Anmeldenummer: 01270416.9
(22) Anmeldetag: 13.09.2001
(51) Int. Cl.: B29C 44/34, B29C 44/04

(54) **AUFSCHÄUMMITTELBELADUNGS- UND MISCHVORRICHTUNG**
MOLD-CHARGING AND MIXING DEVICE FOR FOAMING AGENTS
DISPOSITIF DE CHARGEMENT ET DE MÉLANGE D'AGENT MOUSSANT

(30) Priorität: 15.12.2000 DE 10062659
(43) Veröffentlichungstag der Anmeldung: 17.09.2003
(73) Patentinhaber: Demag Ergotech GmbH, 90571 Schwaig (DE)
(72) Erfinder: SCHÜRMANN, Erich, 48324 Sendenhorst (DE); HERRMANN, Jürgen, 82166 Gräfelfing (DE); JAEGER, Ansgar, 91207 Lauf (DE); PRIGANDT, Marco, 63796 Kahl/Main (DE); SEIDEL, Jörg, 90559 Burgthann (DE)
(74) Vertreter: Grünecker, Kinkeldey, Stockmair & Schwanhäusser Anwaltssozietät
(86) Internationale Anmeldenummer: PCT/EP2001/010603
(87) Internationale Veröffentlichungsnummer: WO 2002/047885

(56) Entgegenhaltungen:
- DE-A- 3 246 622
- FR-A- 1 299 590
- GB-A- 921 912
- US-A- 3 809 519
- US-A- 4 043 715
- US-A- 4 124 308
- US-A- 5 098 267
- US-A- 5 124 095

## Beschreibung

Es ist aus der US-A-4473665, das die Bildung von Kunststoff diskutiert, bekannt, das eine Lösung aus superkritischem Aufschäum- oder Treibmittel mit einer Kunststoffschmelze erwünschenswert ist, um aufgeschäumten Kunststoff zu erzeugen. In der US-A-4473665 wird vorgeschlagen, Kunststoffpellets mit dem Aufschäummittel in einem Extrudiertrichter bei erhöhter Temperatur zu sättigen. Werden die gesättigten Pellets anschießend mit entsprechender Temperaturen und Druck im Extruder geschmolzen, ist das Aufschäummittel superkritisch und wird mit der Schmelze bei Transport entlang des Schneckenkolbens gemischt. In der US-A-4473665 wird diese Lösung bevorzugt, da dort angemerkt ist, dass eine direkte Einspritzung von Gas in den Zylinder des Extruders sehr schwierig ist, da das Gas in kleinen Mengen abgemessen werden muss und es schwierig sei, das Gas zu messen, das aus dem Zylinder austreten könnte. Ein Einführen des Aufschäummittels in den Trichter ist allerdings nicht praktisch, wenn auch möglich.

Im Gegensatz zu der Lehre aus der US-A-4473665 ist es noch bekannt, ein aufgeschäumtes Kunststoffmaterial durch Einführen von superkritischem Gas in den Zylinder eines Extruders zu erzeugen, siehe US-A-5158986. Allerdings benötigt diese Lösung wie in der US-A-4473665 vorhergesagt, eine Vielzahl von Öffnungstreibmittelmessanordnungen, wie in der WO99/32544 beschrieben. Bei der letzten Druckschrift wird die Extrusionsschnecke als Wischelement verwendet, um ein Verstopfen der feinen Öffnungen zu verhindern, die zur Zumessung des superkritischen Gases verwendet werden. Spezielle Ventilsteuerungen zur Verhinderung eines Rückflusses des Aufschäummittels müssen ebenfalls vorgesehen werden, wie beispielsweise in der WO99/58702 beschrieben.

Auch wenn die vorangehend beschriebenen Konstruktionen funktionieren können, sollte es doch offensichtlich sein, dass diese Vorrichtungen spezielle Mechanismen benötigen, um die grundlegenden Probleme zu überwinden, die sich zwangsläufig bei dem Zuführen eines superkritischen Gases als Aufschäummittel in die Schmelze ergeben. Weiterhin ist eine teure Ausrüstung erforderlich, um das superkritische Gas herzustellen. Da die Extruderschnecke sowohl zum Plastifizieren des Kunststoffs als auch zum Mischen der Kunststoffschmelze mit dem superkritischen Gas verwendet wird, ist sie nicht besonders effektiv. Die Mischrate muss entsprechend zur Rate sein, mit der die Kunststoffschmelze plastifiziert wird. Auch wenn eine Extruderschnecke mit reduzierter Länge insbesondere verwendbar zum Plastifizieren eines festen Kunststoffs ist, ist diese Anordnung nicht notwendigerweise eine optimale Mischanordnung zur Mischung einer Kunststoffschmelze und eines superkritischen Treibmittels aufgrund der sehr hohen Scherkräfte.

Es ist bereits seit längerer Zeit beim Einspritzen bekannt, einen sogenannten Shot-Pot oder eine Sammeleinrichtung beziehungsweise eine Kolben/Zylinder-Einheit zur Aufnahme von Schmelze von einem stetig drehenden Extruder zu verwenden. Der Shot-Pot wird dann zum Einspritzen in das Formwerkzeug verwendet. Tatsächlich wurde diese Anordnung durch eine hin- und herbewegliche Inline-Plastifizieranordnung ersetzt, wie sie in den heutigen Einspritzformmaschinen verwendet wird. Beispielsweise aus den WO98/31521 und WO00/26005 ist die Verwendung dieser Anordnung zur Erzeugung von Kunststoffteilen bekannt, wobei die Außenseite dieser Teile aus einem nicht geschäumten Kunststoff und die Innenseite aus einem geschäumten Kunststoff oder umgekehrt hergestellt sind. Bei den dargestellten Beispielen spritzt der Shot-Pot (oder möglicherweise bei einer Darstellung die Extruderschnecke) sowohl mit einem zugemischten Treibmittel gesättigten/ungesättigten Kunststoff und ungesättigten Kunststoff ein. Auch wenn es möglich ist auf diese Art geschäumten/ungeschäumten Kunststoff als Verbundmaterial herzustellen, ist es doch zu Steuerungszwecken wünschenswert, das Einspritzen jeder Komponente getrennt zu steuern.

Die Erfindung betrifft eine Aufschäummittelbeladungs- und Mischvorrichtung mit wenigstens einer Mischeinrichtung und einer Aufschäummitteldosiereinrichtung, wobei die Aufschäummittelbeladungs- und Mischvorrichtung zwischen einem Plastifizierer, im folgenden Extruder genannt, und einem Formwerkzeug anordbar ist.

Bei einer solchen aus der Praxis und beispielweise aus der US-A-5124095 bekannten Aufschäummittelbeladungs- und Mischvorrichtung wird dieser vom Extruder mit beispielsweise einer Plastifizierschnecke Kunststoffschmelze zugeführt. Diese wird anschließend mit dem der Kunststoffschmelze zugeführten Aufschäummittel vermischt, wobei das Aufschäummittel in der Schmelze verteilt und gelöst wird. Die Kunststoffschmelze mit gelöstem Aufschäummittel wird dann einem Formwerkzeug zum Spritzgießen, Blasformen oder dergleichen zugeführt.

Entsprechende Aufschäummittel sind beispielsweise CO₂ , N₂, He, Ne oder dergleichen.
Die Mischeinrichtung kann ein statischer Mischer sein.
Die Vorrichtung gemäß US-A-5 124 095 weist Gasabgabeöffnungen auf, die mit elastischen Klappen versehen sind, jedoch stets geöffnet sind, und die einen Druckaufbau innerhalb der Gaspumpe und die pulsirende Abgabe bestimmter Mengen von Gas bewirken. Der erfindungsgemäßen Vorrichtung liegt die Aufgabe zugrunde, eine Aufschäummittelbeladungs- und Mischvorrichtung der eingangs genannten Art dahingehend zu verbessem, dass die Dosierung des und die Vermischung mit Aufschäummittel erleichtert und gleichzeitig eine Verstopfungsgefahr der Aufschäummitteldosiereinrichtung vermieden wird.

Diese Aufgabe wird im Zusammenhang mit den Merkmalen des Oberbegriffs des Patentanspruchs 1 dadurch gelöst, dass die Aufschäummitteldosiereinrichtung zur Zufuhr von Aufschäummittel zur Kunststoffschmelze alternierend geöffnet und geschlossen ist. Durch die quasi pulsierende Zuführung von Aufschäummittel wird die Vermischung von diesem mit der Kunststoffschmelze deutlich erleichtert. Durch das stetige Schließen und Öffnen der Aufschäummitteldosiereinrichtung wird außerdem die sonst übliche Verstopfungsgefahr vermindert oder gar ausgeschlossen.

Das altemierende Öffnen und Schließen der Aufschäummitteldosiereinrichtung könnte beispielsweise durch einen separaten Mechanismus erfolgen, der Teil der Aufschäummitteldosiereinrichtung ist. Um allerdings den Aufbau insgesamt zu vereinfachen, kann die Aufschäummitteldosiereinrichtung durch ein der Mischeinrichtung zugeordnetes Schließorgan alternierend geöffnet und geschlossen werden.

Es besteht zwar die Möglichkeit, dass die Aufschäummittetdosiereinrichtung ein entsprechendes Aufschäummittel im gasförmigen Zustand vordosiert und anschließend dieses der Kunststoffschmelze zugesetzt wird. Die Dosierung lässt sich allerdings erheblich dadurch verbessern, dass das Aufschäummittel im flüssigen Zustand ist. Ein solches flüssiges Aufschäummittel ist nicht kompressibel und kann daher erheblich einfacher in erforderlicher Menge dosiert und unter Druck der Kunststoffschmelze zugesetzt werden. Dabei sind die Temperatur- und Druckwerte in der Aufschäummitteldosiereinrichtung so gewählt, dass das Aufschäummittel direkt aus dem flüssigen Zustand in den superkritischen Zustand übergeht, in welchem eine Diffusion und Lösung des Aufschäummittels in der Kunststoffschmelze erheblich vereinfacht ist. Der Übergang vom flüssigen in den superkritischen Zustand soll so spät wie möglich bei der Zudosierung des Aufschäummittels erfolgen und vorzugsweise erst nach Abgabe der flüssigen Aufschäummittels durch die Dosiereinrichtung , wozu der Aufschäummitteldosiereinrichtung eine Kühleinrichtung zugeordnet sein kann.

Bevorzugt wird CO₂ im flüssigen Zustand zudosiert. Weiterhin kann das der Mischeinrichtung zugeordnete Schließorgan auch Teil der Mischeinrichtung sein.

Die Plastifizierschnecke, nach vorliegender Erfindung ist vorzugsweise eine In-line, hin-und herbewegliche Plastifizierschnecke, die eine Anzahl von Vorteilen bei Verwendung zusammen mit einem sogenannten Shot-Pot aufweist. Allerdings kann die Vorrichtung gemäß Erfindung auch mit üblichen Extrudern arbeiten. Das Formwerkzeug gemäß Erfindung ist vorzugsweise ein Formwerkzeug zur Anwendung mit einer bekannten Kniehebelzwinge, wobei auch direkte Druckzwingen oder -klammem verwendet werden können. Das Formwerkzeug kann ebenfalls durch eine Gießform ersetzt werden auch wenn die Erfindung insbesondere zum Füllen bekannter Formwerkzeuge entwickelt wurde, die anfänglich belüftet werden. Geschwindigkeits- und Druckprofile, wie sie bei bekannten Einspritzformvertahren verwendet werden, können auch bei dem Shot-Pot gemäß Erfindung und insbesondere für das Formwerkzeug verwendet werden. Vorzugsweise wird die Geschwindigkeit gesteuert, um einen konsistenten Druckabfall über eine Drossel beim Füllen des Formwerkzeugs zu erhalten.

Es ist ebenfalls möglich, zwei Plastifizierschnecken zum Einspritzen unterschiedlicher Komponenten in Mischkammer und/oder Formwerkzeug zu verwenden, wobei beide Schnecken mit der Mischkammer verbunden sind.

Die Anordnung von zwei Plastifizierschnecken wird vorzugsweise für Sandwich-Konstruktionen im Formwerkzeug verwendet. Beispielsweise kann ein teurer Kunststoff für das äußere Sandwich verwendet werden, um eine Oberfläche hoher Güte bei dem Kunststoffteil zu erhalten, während das Innere des Teils mit einem groben Kunststoff gefüllt wird, der allgemein als "Füllstoff" bezeichnet wird. Gemäß der Erfindung ist es ebenfalls möglich, zuerst Kunststoffschmelze in das Formwerkzeug einzuspritzen und anschließend einen geschäumten Kunststoff. Die reine Schmelze wird zum Erhalten einer Oberfläche hoher Güte verwendet. Es ist ebenfalls möglich, den Schaum auf der Außenseite des Kunststoffteils und die Schmelze im Inneren vorzusehen.

Werden nur Schmelze und geschäumtes Kunststoffmaterial verwendet, ist es erfindungsgemäß möglich, nur eine Plastifizierschnecke zu verwenden, wobei diese zusammen mit einer Richtungsumschalteinrichtung Schmelze oder mit Aufschäummitteln vermischte Schmelze dem Formwerkzeug von der Plastifizierschnecke und/oder dem Shot-Pot zuführen kann.

Werden zwei Schnecken verwendet, kann ein teures Kunststoffmaterial für die Außenseite des Teils verwendet werden, das immer noch aufgeschäumt werden kann, da die Zellgrößen, die nicht mikrozellular sind, noch immer eine gute Oberfläche erzeugen und sehr preiswertes Füllmaterial kann daher auf der Außenseite verwendet werden. Alternativ kann auch das teure Kunststoffmaterial außen und das preiswerte und geschäumte Kunststoffmaterial zur Reduzierung der Kosten Innen verwendet werden.

Es ist ebenfalls möglich, sequentiell unter Verwendung nur eines Shot-Pot durch zwei Einspritzschnecken in gewissen Anordnungen einzuspritzen, um eine geschäumte äußere Haut und einen geschäumten inneren Kem bei dem Kunststoffteil zu erzeugen.

Geschwindigkeits- und/oder Druckprofile des Einspritzen beider Materialien werden so gesteuert, dass die Möglichkeit besteht, die Rate beim Füllen des Formwerkzeugs zu ändern.

Demgemäss kann die Erfindung und insbesondere der Shot-Pot für zwei Einspritzschnecken oder zwei mit einem Formwerkzeug verbundener Einheiten verwendet werden, um ein Formen von preiswerten/teuren Kunststoff durchzuführen, von denen jeder oder wenigstens einer geschäumt sein kann.

Um stetig Aufschäummittel der Kunststoffschmelze zuführen zu können, kann die Aufschäummittetdosiereinrichtung wenigstens zwei in einem Vorrichtungsgehäuse mündende Eintrittsbohrung aufweisen, die durch die Mischeinrichtung wechselseitig geöffnet und geschlossen sind. Das heißt, immer nur eine von beiden Eintrittsöffnungen ist geöffnet während die andere geschlossen ist. Eine solche Aufschäummitteldosiereinrichtung ist einfach realisierbar und steuerbar.

Um die erfindungsgemäße Aufschäummittelbeladungs- und Mischvorrichtung nachrüsten zu können und auch bei üblichen Extrudern und Formwerkzeugen einsetzen zu können, kann die Aufschäummittelbeladungs- und Mischvorrichtung als Modul ausgebildet sein, das lösbar zwischen Extruder und Formwerkzeug anordbar ist. Beispielsweise wird die Vorrichtung vor einem Schneckenzylinder eines Extruders einer üblichen Kunststoffmaschine angeflanscht. Die Verbindung mit dem Formwerkzeug kann in ähnlicher Weise erfolgen. Das Modul kann auch so ausgebildet sein, dass es über im Wesentlichen genormte Anschlussbereiche mit entsprechenden Verbindungen verfügt, die mit üblichen Formwerkzeugen verbindbar sind.

Um die Aufschäurnmittelbeladungs- und Mischvorrichtung möglichst kompakt zu gestalten und wenig Platz zwischen Extruder und Formwerkzeug zu benötigen, kann die Auschäummittelbeladungs- und Mischvorrichtung sich quer zur Längsrichtung des Extruders erstrecken und im Vorrichtungsgehäuse kann ein mit einem Abgabeende des Extruders verbindbare Seitenöffnung ausgebildet sein.

In Relation zu dieser Seitenöffnung kann das Formwerkzeug, beispielsweise auch rechtwinklig zum Extruder oder unter einem anderen Winkel zu diesem angeordnet sein. Entsprechend kann eine Abgabeöffnung im Vorrichtungsgehäuse insbesondere gegenüberliegend zur Seitenöffnung ausgebildet sein. Bei der gegenüberliegenden Anordnung sind Extruder und Formwerkzeug im Wesentlichen in einer Ebene auf gegenüberliegenden Seiten der Aufschäummittelbeladungs- und Mischvorrichtung angeordnet.

Um sicherzustellen, dass erst bei Abgabe zum Formwerkzeug eine Entspannung der unter Druck gesetzten Kunststoffschmelze und damit ein Aufschäumen der Schmelze durch das aufschäumende Aufschäummittel erfolgt, kann der Abgabeöffnung eine Drosseleinrichtung zugeordnet sein, über die Kunststoffschmelze mit gelöstem Aufschäummittel in das Formwerkzeug abgebbar sind.

Zur diskontinuierlichen Abgabe von Kunststoffschmelze mit Aufschäummittel ist es möglich, dass Abgabeöffnung und/oder Drosseleinrichtung durch insbesondere ein Verschlussventil verschließbar sind. Auf diese Weise kann in der Aufschäummittelbeladungs- und Mischvorrichtung eine entsprechende Kunststoffschmelze so lange aufbereitet werden, bis das Aufschäummittel entsprechend dosiert, eingemischt und in Lösung gebracht wurde. Erst anschließend wird dann die Kunststoffschmelze mit gelöstem Aufschäummittel über Drosseleinrichtung und Abgabeöffnung ausgetragen und entspannt sich im Formwerkzeug.

Um die Aufschäummittelbeladungs- und Mischvorrichtung unabhängig vom Extruder und insbesondere einem dort anliegenden Druck betreiben zu können, kann der Seitenöffnung eine Verschlusseinrichtung zugeordnet sein. Bei geöffneter Verschlusseinrichtung wird vom Extruder mittels der Plastifizierschnecke Kunststoffschmelze der Aufschäummittelbeladungs- und Mischvorrichtung zugeführt und nach Zufuhr einer erwünschten Menge kann die Verschlusseinrichtung geschlossen werden. Anschließend kann die Dosierung des Aufschäummittels, dessen Einmischen und in Lösung bringen erfolgen. Außerdem kann auch das Austragen und Entspannen der Kunststoffschmelze mit gelöstem Aufschäummittel unabhängig vom Extruder, d.h. bei geschlossener Verschlusseinrichtung erfolgen.

Es sind verschiedene Ausführungsbeispiele für eine solche Verschlusseinrichtung denkbar. Ein Ausführungsbeispiel ist ein Rückschlagventil, das nur bei entsprechender Druckbeaufschlagung von Seiten des Extruders her einen Zutritt von Kunststoffschmelze zur Aufschäummittelbeiadungs- und Mischvorrichtung erlaubt. Sobald der Extruder keine Kunststoffschmelze mehr fördert und der Druck auf Seiten des Extruders her entsprechend gering ist, schließt das Rückschlagventil.

Ein weiteres Ausführungsbeispiel für eine solche Verschlusseinrichtung ist eine Rückschlagklappe. Diese schließt, sobald der Druck auf Seiten des Extruders geringer als in der Aufschäummittelbeladungs- und Mischvorrichtung ist.

Es ist auch möglich ein Rückströmen des Aufschäummittet/Schmetzegemisches in den Schneckenzylinder der Plastifizierschnecke durch einen aktiv betätigten, hydraulischen Verschlussbolzen zu verhindern.

Um Kunststoffschmelze vor oder nach Vermischen mit Aufschäummittel bevorraten zu können, kann das Vorrichtungsgehäuse wenigstens eine Sammeleinrichtung für Kunststoffschmelze aufweisen. In diesem Zusammenhang ist darauf zu achten, dass bei Kunststoffschmelze mit bereits eingemischtem Aufschäummittel der Druck in der Sammeleinrichtung ausreichend hoch ist, um ein vorzeitiges Aufschäumen des Aufschäummittels zu verhindern.

Um beispielsweise unterschiedliche Größen von Sammeleinrichtungen in einfacher Weise zu ermöglichen, kann die Sammeleinrichtung am Vorrichtungsgehäuse lösbar befestigt sein. Auf diese Weise kann eine größere oder kleinere Sammeleinrichtung, je nach erwünschter Vorratshaltung, angeordnet werden.

Eine einfach aufgebaute Sammeleinrichtung, die sogar ein variables Volumen aufweist, kann durch eine Kolben-Zylinder-Einheit gebildet sein.

Um in diesem Zusammenhang in einfacher Weise einen genügend hohen Druck in der Sammeleinrichtung aufrecht erhalten zu können, kann der Kolben der Kolben-Zylinder-Einheit gebremst ausschiebbar sein.

Um die Kunststoffschmelze durch die Mischeinrichtung insbesondere im Hinblick auf das eingebrachte Aufschäummittel zu mischen, kann die Sammeleinrichtung im Wesentlichen auf einer dem Extruder und/oder dem Formwerkzeug gegenüberliegenden Seite der Mischeinrichtung angeordnet sein. Dies kann in einfacher Weise dadurch erfolgen, dass eine Kanalverbindung zwischen Seitenöffnung und Sammeleinrichtung und/oder zwischen Abgabeöffnung und Sammeleinrichtung ausgebildet ist, wobei in der Kanalverbindung die Mischeinrichtung angeordnet ist. In diesem Zusammenhang ist zu beachten, dass natürlich die selbe Kanalverbindung Seitenöffnung und Sammeleinrichtung sowie Abgabeöffnung und Sammeleinrichtung verbinden kann. Ebenso ist es denkbar, dass getrennte Kanalverbindungen zwischen Seitenöffnung und Sammeleinrichtung und Abgabeöffnung und Sammeleinrichtung angeordnet sind. Dabei ist weiterhin zu beachten, dass bei beispielsweise zwei Kanalverbindungen auch entsprechend zwei Mischeinrichtungen in diesen Kanalverbindungen angeordnet sein können.

Ein einfaches Ausführungsbeispiel für eine Mischeinrichtung kann darin gesehen werden, dass diese eine Mischerwelle und von dieser nach außen abstehende Mischelemente aufweist.

Um das Öffnen und Verschließen der Aufschäummitteldosiereinrichtung in diesem Zusammenhang in einfacher Weise zu ermöglichen, kann die Aufschäummitteldosiereinrichtung durch Mischelemente und/oder von der Mischwelle nach außen abstehende Schließelemente bei Drehung der Mischerwelle verschließbar sein. Analog erfolgt das wechselseitige Öffnen und Schließen der Eintrittsöffnungen der Aufschäummitteldosiereinrichtung.

Um insbesondere eine Zweikomponentenfahrweise in einfacher Weise mittels der erfindungsgemäßen Gasbeladungs- und Mischvorrichtung zu ermöglichen, kann im Vorrichtungsgehäuse eine Wegeumschalteinrichtung angeordnet sein. Diese verbindet in einer Stellung das Formwerkzeug direkt mit dem Extruder, so dass plastifiziertes Kunststoffmaterial ohne Aufschäummittel zugeführt werden kann. In zumindest einer weiteren Stellung der Wegeumschalteinrichtung stellt diese eine Verbindung zwischen Sammeleinrichtung und Formwerkzeug her, so dass in der Sammeleinrichtung enthaltenes Gemisch aus Aufschäummittel und plastifizierten Kunststoffmaterial dem Formwerkzeug zuführbar ist. Es ist eine weitere Stellung der Wegumschalteinrichtung denkbar, bei der das Gemisch aus der Sammeleinrichtung zuerst wieder dem Mischer oder Extruder zugeführt wird und erst anschließend beispielsweise dem Formwerkzeug.

Zur vereinfachten Portionierung des Aufschäummittels kann das der Aufschäummitteldosiereinrichtung zugeführte Aufschäummittel flüssig sein.

Die Aufschäummitteldosiereinrichtung kann in unterschiedlicher Weise ausgebildet sein. Ein einfaches Ausführungsbeispiel kann darin gesehen werden, dass die Aufschäummitteldosiereinrichtung eine Kolbenpumpe aufweist. Durch diese sind entsprechende Mengen des Aufschäummittels der Schmelze unter Druck und je nach Betätigungszyklus der Kolbenpumpe mit entsprechender Frequenz zusetzbar.

Um die Kolbenpumpe in einfacher Weise betreiben zu können und gegebenenfalls gleichzeitig exakt zur Dosierung des Aufschäummittels bewegen zu können, kann der Kolbenpumpe ein Linearantrieb insbesondere mit integriertem Wegmesssystem zugeordnet sein.

Um den Druck in der Kolbenpumpe immer auf hohem Niveau zu halten, kann die Kolbenpumpe hochdruckseitig eine Rückschlagklappe aufweisen.

Um die Kolbenpumpe relativ unabhängig zur Aufschäummittelquelle ausführen zu können, kann die Kolbenpumpe eine Aufschäummitteleinspeisestelle aufweisen. Mit dieser ist ein entsprechender Anschluss der Aufschäummittelquelle verbindbar. Um in diesem Zusammenhang zu verhindern, dass Aufschäummittel in Richtung Aufschäummittelquelle zurückgeführt wird, kann der Aufschäummitteleinspelsestelle insbesondere eine in Richtung Schließstellung kraftbeaufschlagte Rückschlagklappe zugeordnet sein.

Es ist selbstverständlich auch möglich, dass statt der vorangehend genannten Rückschlagklappen andere Mechanismen eingesetzt werden.

Die Kühleinrichtung der Aufschäummitteldosiereinrichtung kann in unterschiedlichster Wiese aufgebaut sein. Ein einfaches Ausführungsbeispiel ohne großen Konstruktionsaufwand kann darin gesehen werden, dass in der Kühleinrichtung zur Kühlung Aufschäummittel zyklisch entspannt wird.

Die Mischeinrichtung kann bei einem einfachen Ausführungsbeispiel wenigstens eine Mischerwelle aufweisen. Die Mischerwelle kann in axialer Richtung verschieblich gelagert sein.

Um allerdings bei den hohen auftretenden Kräften die Lagerung der Mischerwelle zu vereinfachen, kann diese in axialer Richtung ortsfest und koaxial in einem Zylinderrohr angeordnet sein.

In diesem Zusammenhang ist es wegen der gegebenenfalls hohen auftretenden Drücke weiterhin von Vorteil, wenn die Mischerwelle an ihren beiden Wellenenden gelagert ist.

Die Mischerwelle weist zur guten Durchmischung von Schmelze mit zugeführtem und in der Schmelze superkritischem Aufschäummittel wenigstens zwei im wesentlichen radial nach außen abstehende Mischelemente auf. Zusätzlich zu diesen Mischelementen kann das obengenannte Schließorgan auf der Mischerwelle angeordnet und mit dieser drehbar sein. Die Mischelemente können Rautenmischelemente, sogenannte Twente-Mischelemente oder andere aus insbesondere der Spritzgießtechnik bekannte Mischelemente sein.

Es ist ebenfalls möglich, eine Mischwelle mit Schneekengeometne' zu verwenden. Auch in diesem Zusammenhang kann das Schließorgan separat zu den Mischelementen auf der Mischwelle angeordnet sein. Es besteht allerdings ebenfalls die Möglichkeit, dass wenigstens eines der Mischelemente als Schließorgan ausgebildet ist.

Um den Mischelementen entsprechend Schmelze gleichmäßig und gut verteilt relativ zur Mischerwelle zuführen zu können, können die Mischelemente parallel mit Schmelze beströmbar sein.

Um die Schmelze in einfacher Weise der Mischerwelle und damit den Mischelementen zuführen zu können, können Schmelzeein- und -austritte radial zur Mischerwelle angeordnet sein.

Um an unterschiedlichen Stellen entlang der Mischerwelle gleichzeitig Schmelze zuführen zu können, können wenigstens zwei in axialer Richtung beabstandete Schmelzeintritte ausgebildet sein. Über diese wird Schmelze gleichzeitig an unterschiedlichen Stellen der Mischerwelle den entsprechenden Mischelementen zugeführt.

Um insbesondere bei zwei Schmelzeintritten die Schmelze durch die Mischelemente der Mischerwelle gleichmäßig und gut zur Verteilung des Aufschäummittels durchmischen zu können, können die Schmelzeintritte insbesondere Wellenenden der Mischerwelle zugeordnet sein. In diesem Zusammenhang ist jedem der Schmelzeintritte eine Aufschäummitteldosiereinrichtung zugeordnet. Um gleichzeitig eine Abgabe der mit Aufschäummittel vermischten Schmelze in einfacher Weise zu ermöglichen, kann ein Schmelzaustritt im wesentlichen mittig zwischen den beiden Schmelzeintritten angeordnet sein. Der Schmelzaustritt kann an anderer radialer Stelle relativ zur Mischerwelle als die beiden Schmelzeintritte angeordnet sein. Ein Beispiel für eine solche Anordnung des Sch melzaustritts ist relativ zur Mischerwelle diametral gegenüberliegend zu den Schmelzeintritten. Durch die Verwendung einer Wegeumschalteinrichtung in einer Aufschäummittelbeladungs- und Mischvorrichtung nach der vorangehend beschriebenen Art, die zwischen einer Zufuhr eines Gutes von wenigstens zwei verschiedenen Quellen zu einem Verbraucher umschaltbar ist, kann beispielsweise Kunststoffschmelze ohne Zusatz von Aufschäummittel direkt dem Formwerkzeug zugeführt werden oder aber erst nach Zusetzen des Aufschäummittels und Speicherung der Mischung in der Sammeleinrichtung.

Um in einfacher Weise zwischen einer Zufuhr von einer dieser beiden Quellen zum Formwerkzeug als Verbraucher umschalten zu können, weist die Wegeumschalteinrichtung einen Außen- und einen in diesem drehbar gelagerten Innenkörper auf, wobei ein Ausgang des Außenkörpers mit jeweils einem von wenigstens zwei Eingängen des Außenkörpers durch einen insbesondere exzentrisch im Innenkörper angeordneten Verbindungskanal verbindbar ist.

In diesem Zusammenhang ist einer der Eingänge dem Extruder und der andere der Eingänge der Sammeleinrichtung zugeordnet, während die Abgabe des über die Eingänge zugeführten Gutes über den einen Ausgang direkt zum Formwerkzeug erfolgt Durch einfaches Verdrehen des Innenkörpers stellt der Verbindungskanal selektiv eine Verbindung zwischen Ausgang und einem der Eingänge her.

Um den Innenkörper um 360° im Außenkörper verdrehen zu können, können Außen-und Innenkörper einen kreisförmigen Querschnitt aufweisen. Dabei ist zu beachten, dass der Außenkörper als Kreisring ausgebildet ist, in dessen Innenbohrung der Innenkörper drehbar gelagert ist. Die Eingänge und der Ausgang sind in dem ringförmigen Außenkörper ausgebildet.

Der Verbindungskanal könnte im Innenkörper gekrümmt verlaufen um in verschiedenen Drehstellungen des Innenkörpers entsprechende Verbindungen von Ausgang und Eingang herzustellen. Einfacher herzustellen ist allerdings ein Innenkörper, bei dem der Verbindungskanal sich geradlinig im Innenkörper erstreckt. Um durch einen einzigen Verbindungskanal den Ausgang mit beiden Eingängen in entsprechenden Stellungen des Innenkörpers verbinden zu können, ist eine Mittellinie des Verbindungskanals parallel versetzt zu einem Durchmesser des Innenkörpers angeordnet, wodurch der Verbindungskanal exzentrisch im Innenkörper verläuft.

Um in diesem Zusammenhang in einfacher Weise die unterschiedlichen Verbindungen herstellen zu können, können Ausgang und ein Eingang des Außenkörpers einander gegenüberliegen und eine diese verbindende Mittellinie mit der Mittellinie des Verbindungskanals in dessen Ausgang und den einen Eingang verbindenden Stellung zusammenfallen.

Es besteht zwar die Möglichkeit, dass der Verbindungskanal mit kleineren Abmessungen als Ausgang und Eingänge oder mit größeren Abmessungen ausgebildet ist. Ebenfalls können die Eingänge unterschiedlich und/oder auch unterschiedlich zum Ausgang in ihren Abmessungen geformt sein. Bei einem einfach herzustellenden Ausführungsbeispiel können allerdings Ausgang, Eingänge und Verbindungskanal gleichen Durchmesser aufweisen.

Um nicht nur Eingänge und Ausgänge in einer Ebene miteinander verbinden zu können, kann die Wegeumschalteinrichtung einen im wesentlichen zylindrischen Innenkörper aufweisen.

Um in einfacher Weise unterschiedliche Eingänge und Ausgänge anfahren zu können, kann der Verbindungskanal im wesentlichen entlang einer Drehachse des zylindrischen Innenkörpers verlaufen und eine Anzahl von Abzweigkanälen aufinreisen, denen durch Drehung des Innenkörpers zumindest zwei Ausgänge und/oder Eingänge im Außenkörper zuordbar sind.

Um bei der erfindungsgemäßen Aufschäummittelbeladungs- und Mischvorrichtung entsprechende Verbindungen von Eingängen und Ausgängen herstellen zu können, kann der Außenkörper fünf Ausgänge/Eingänge mit zugehörigen Kanälen und der Innenkörper sechs Abzweigkanäle aufweisen, von denen je nach Drehstellung des Innenkörpers unterschiedliche Ausgänge/Eingänge und Abzweigkanäle in Verbindung sind. In einer Drehstellung kann beispielsweise der Extruder mit zwei Mischeinrichtungen verbunden sein. In einer weiteren Drehstellung kann die Sammeleinrichtung mit einem Formwerkzeug oder dergleichen verbunden sein. In einer noch weiteren Drehstellung kann ein an der Aufschäummittelbeiadungs- und Mischvorrichtung angeschlossener Extruder mit dem Formwerkzeug und in einer noch anderen Drehstellung können die Mischeinrichtungen beziehungsweise auch eine einzelne Mischeinrichtung mit dem Formwerkzeug verbindbar sein. Schließlich kann auch ein Zurückführen des Gemisches von der Sammeleinrichtung zum Mischer oder Extruder erfolgen.

Im Folgenden werden vorteilhafte Ausführungsbeispiele der Erfindung anhand von beigefügten Figuren näher erläutert.

Es zeigen:
- Figur 1: einen Längsschnitt durch ein erstes Ausführungsbeispiel einer Aufschäummittelbeladungs- und Mischvorrichtung gemäß Erfindung;
- Figur 2: einen Schnitt entlang der Linie II-II aus Figur 1;
- Figur 3: einen Längsschnitt analog zu Figur 1 durch ein weiteres Ausführungsbeispiel;
- Figur 4: eine perspektivische Ansicht eines Beispiels für eine zweckmäßige Wegeumschalteinrichtung;
- Figur 5: einen Schnitt durch ein zweites Ausführungsbeispiel einer Aufschäummittelbeladungs- und Mischvorrichtung mit doppelter Schmelzezuführung;
- Figur 6: einen Längsschnitt durch ein erstes Ausführungsbeispiel einer ventilartigen Aufschäummitteldosiereinrichtung, und
- Figur 7: einen Längsschnitt analog zu Figur 6 durch ein zweites Ausführungsbeispiel einer Aufschäummitteldosiereinrichtung.

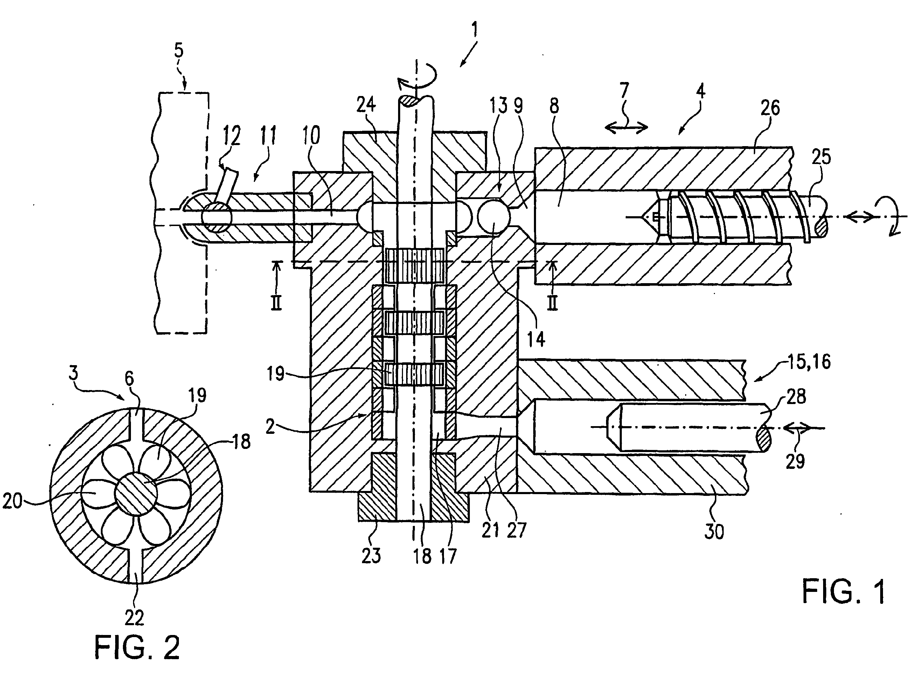

In Figur 1 ist ein Längsschnitt durch eine erfindungsgemäße Aufschäummittelbeladungs- und Mischvorrichtung 1 dargestellt. Diese weist eine Mischeinrichtung 2 und eine Aufschäummitteldosiereinrichtung 3, siehe Figur 2, auf. Diese sind in einem Vorrichtungsgehäuse 21 angeordnet.

Die Mischeinrichtung 2 weist eine Mischerwelle 18 auf, die an beiden Enden des Vorrichtungsgehäuses in Lagerelementen 23, 24 drehbar gelagert ist und durch das Lagerelement 24 nach außen zu einem nicht dargestellten Antrieb geführt ist. An der Mischerwelle stehen innerhalb des Vorrichtungsgehäuses 21 eine Reihe von Mischelementen 19 ab. Benachbart zum Lagerelement 24 sind seitlich am Vorrichtungsgehäuse 21 ein Plastifizieren in Form eines Extruders 4 und ein Formwerkzeug 5 angeordnet. Die Aufschäumbeladungs- und Mischvorrichtung 1 ist als Modul ausgebildet, das zwischen Extruder 4 und Formwerkzeug 5 anordbar ist und insbesondere am Abgabeende 8 des Extruders 4 anflanschbar ist.

Der Extruder 4 ist in dem dargestellten Ausführungsbeispiel als Plastifizierschnecke 25 mit einem diese umgebende Extrudergehäuse 26 gebildet. Die Plastifizierschnecke 25 ist sowohl in ihrer Längsrichtung 7 verstellbar als auch um ihre entsprechende Längsachse verdrehbar im Extrudergehäuse 26 gelagert. Dem Abgabeende 8 des Extrudergehäuses 26 ist eine Seitenöffnung 9 des Vorrichtungsgehäuses 29 zugeordnet. In dieser Seitenöffnung 9 ist eine Verschlusseinrichtung 13 in Form einer Rückschlagklappe 14 angeordnet.

Diametral relativ zum Vorrichtungsgehäuse 21 gegenüberliegend zur Seitenöffnung 9 ist eine Abgabeöffnung 10 im Vorrichtungsgehäuse 21 ausgebildet. Mit dieser ist eine Drosseleinrichtung 11 in Verbindung, in weicher ein Verschlussventil 12 angeordnet ist. An die Drosseleinrichtung 11 schließt sich ein teilweise dargestelltes Formwerkzeug 5 an. Dieses kann ein Werkzeug zum Spritzgießen, zum Blasformen oder dergleichen sein.

Benachbart zum anderen Lagerelement 23 ist ein Durchlass 27 im Vorrichtungsgehäuse 21 ausgebildet. Dieser verbindet eine Kanalverbindung 17 innerhalb des Vorrichtungsgehäuses 21, die sich im Wesentlichen quer zur Längsrichtung 7 des Extruders 4 erstreckt und in der die Mischeinrichtung 2 angeordnet ist, mit einer Kolben-Zylinder-Einheit 16 als Sammeleinrichtung. In einem Kolbenzylinder 30 ist dabei ein Kolben 28 in Verstellrichtungen 29 verschieblich gelagert.

In Figur 2 ist ein Schnitt entlang der Linie II-II aus Figur 1 dargestellt. Dieser Figur ist entnehmbar, dass die Aufschäummitteldosiereinrichtung 3 wenigstens zwei Eintrittsbohrungen 6, 22 aufweist. Über diese ist von einer nicht dargestellten Pumpe und einem entsprechenden Vorratsbehälter Aufschäummittel, wie beispielsweise CO₂. der Kanalverbindung 17 im Bereich der Mischeinrichtung 2 insbesondere aktiv gekühlt zuführbar. Die beiden Eintrittsbohrungen 6, 22 liegen einander relativ zur Mischerwelle diametral gegenüber. Im Bereich der Eintrittsbohrung sind auf der Mischerwelle 18 entsprechende Mischelemente 19 und/oder Schließelement 20 angeordnet. Diese schlie-βen und öffnen wechselseitig die Eintrittsbohrungen 6, 22 zur pulsierenden Abgabe von Aufschäummittel in die durch die Mischeinrichtung 2 bearbeitete Kunststoffschmelze.

Es ist ebenfalls möglich, dass die Eintrittsbohrungen 6, 22 beispielsweise rechtwinklig zueinander oder unter einem anderen Winkel geneigt zueinander im Vorrichtungsgehäuse 21 ausgebildet sind. Ebenso besteht die Möglichkeit, dass mehr als zwei Eintrittsbohrungen vorgesehen sind. Auch bei diesen altemativen Ausführungsbeispielen werden entsprechende Eintrittsbohrungen jeweils durch die Mischelemente 19 bzw. Schließelemente 20 wechselseitig verschlossen und geöffnet.

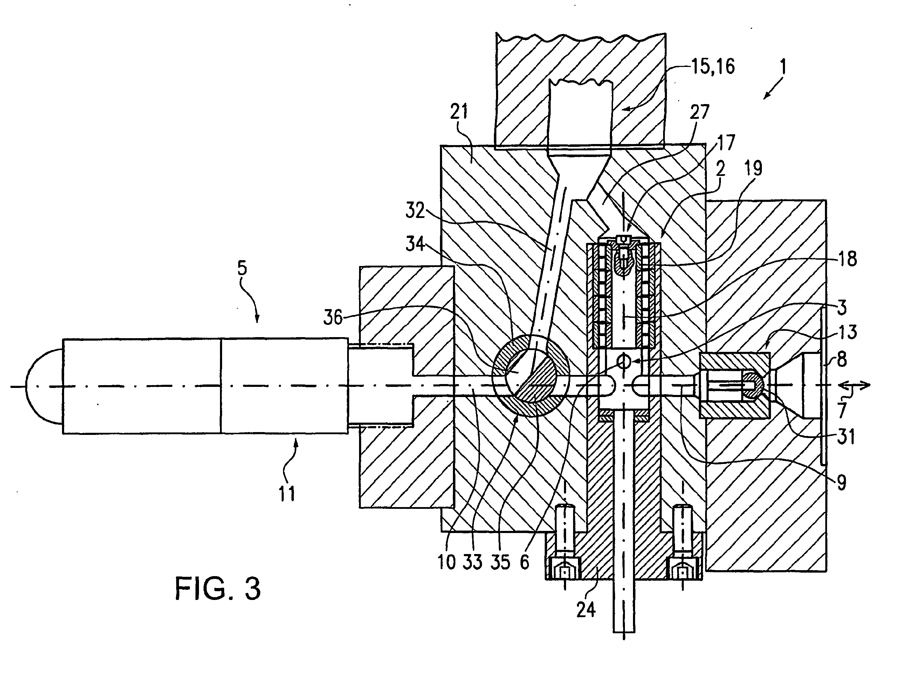

In Figur 3 ist ein Längsschnitt analog zu Figur 1 durch ein weiteres Ausführungsbeispiel einer erfindungsgemäßen Gasbeladungs- und Mischvorrichtung 1 dargestellt Gleiche Teile sind mit gleichen Bezugszeichen versehen und werden nur noch teilweise erwähnt.

Das Ausführungsbeispiel nach Figur 3 unterscheidet sich insbesondere vom Ausführungsbeispiel nach Figur 1 in der Anordnung der Sammeleinrichtung 15 relativ zum Vorrichtungsgehäuse 21 und in der zusätzlichen Anordnung einer Wegeumschalteinrichtung 33 im Vorrichtungsgehäuse.

Die Sammeleinrichtung 15 kann wie beim ersten Ausführungsbeispiel als Kolben-Zylinder-Einheit 16 ausgebildet sein. Diese ist in Figur 3 senkrecht zu einer Längsrichtung 7 des nicht dargestellten Extruders und ebenfalls senkrecht zum Formwerkzeug 5 angeordnet, von dem nur eine entsprechende Drosseleinrichtung 11 sichtbar ist. Das heißt, die Sammeleinrichtung 15 ist im wesentlichen in Verlängerung der Mischeinrichtung 2 angeordnet, so dass von dieser über einen Durchlass 27 am Ende der Kanalverbindung 17 plastifiziertes Kunststoffmaterial, das mit Aufschäummittel vermischt ist, der Sammeleinrichtung 15 zuführbar ist. Um entsprechend aus der Sammeleinrichtung dort vorhandenes Material dem Formwerkzeug 5 zuführen zu können, ist im Vorrichtungsgehäuse 21 ein Zuführkanal 32 ausgebildet. Dieser erstreckt sich von der Sammeleinrichtung 15 in Richtung einer Wegeumschalteinrichtung 33, die in Figur 3 in einer Sammeleinrichtung 15 und Formwerkzeug 5 verbindenden Stellung angeordnet ist Die Wegeumschalteinrichtung 33 weist einen Außenkörper 34 auf, in dem ein Innenkörper 35 mit einem Verbindungskanal 36 drehbar gelagert ist. In dem Außenkörper sind zwei Eingänge 38, 40 ausgebildet, die mit dem Zuführkanal 32 beziehungsweise dem Extruder 4 in Verbindung stehen. Weiterhin weist der Außenkörper einen Ausgang 41 auf, der mit der Abgabeöffnung 10 und damit mit dem Formwerkzeug 5 verbunden ist. Der Verbindungskanal 36 ist exzentrisch im Innenkörper 35 angeordnet, wobei seine Mittellinie 36 parallel versetzt zu einem Durchmesser des Innenkörpers angeordnet ist. Der Verbindungskanal kann bei Drehung des Innenkörpers um einen entsprechenden Winkel die Abgabeöffnung 10 im Vorrichtungsgehäuse 21 mit dem Extruder (nicht dargestellt), beziehungsweise der Seitenöffnung 9 verbinden. In diesem Fall ist die Verbindung zwischen dem Ausgang 37 und dem Eingang 38 des Außenkörpers 34 hergestellt, die einander gegenüberliegen und deren sie verbindende Mittellinie 41 bei entsprechender Stellung des Innenkörpers zur Verbindung des Eingangs 38 mit dem Ausgang 37 mit der Mittellinie 40 des Verbindungskanals 36 zusammenfällt. Bei einer solchen Stellung des Innenkörpers 35 erfolgt eine direkte Zufuhr von plastifiziertem Kunststoffmaterial vom Extruder zum Formwerkzeug.

Der Innenkörper 35 ist weiterhin so drehbar, dass das Formwerkzeug sowohl in seiner Verbindung zur Sammeleinrichtung 15 als auch zum Extruder abgesperrt ist. Daher kann bei dem Ausführungsbeispiel nach Figur 3 im wesentlichen auf ein separates Verschlussventil 12, siehe Figur 1, verzichtet werden.

Bei dem dargestellten Ausführungsbeispiel sind Innen- und Außenkörper kreisförmig beziehungsweise kreisringförmig und die Durchmesser von Ausgang, Eingängen und Verbindungskanal sind gleich.

In Figur 3 ist ebenfalls ein Mikroprozessor-Steuergerät dargestellt, das zumindest Abgabe.düse 11, Zahnrad, CO₂-Pumpe und Richtungsumschalteinrichtung 33 und dergleichen steuert. Das CO₂ ist unter einem Druck von in etwa 60 bar in einer Flasche und durch die Pumpe wird der Druck auf beispielsweise 700 bar erhöht.

Durch die Maschinensteuerung ist es ebenfalls möglich, sowohl Geschwindigkeits- als auch Druckeinspritzprofil zu steuern.

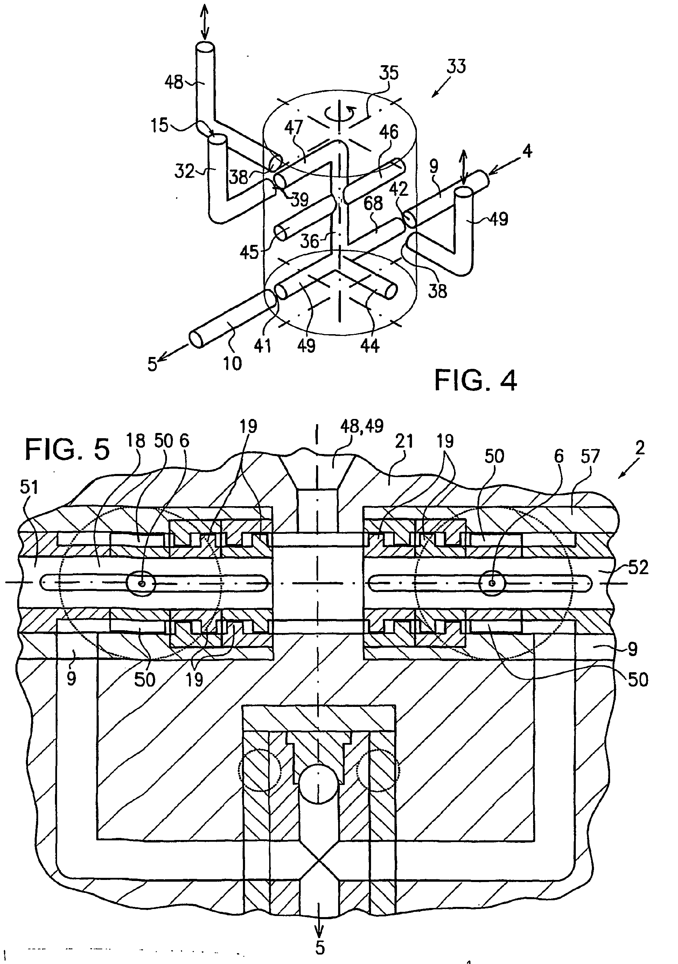

In der Figur 4 ist eine perspektivische Ansicht einer Wegeumschalteinrichtung 33 als Teil eines weiteren Ausführungsbeispiels dargestellt.

Diese weist einen zylindrischen Innenkörper 35 auf, in dem ein Verbindungskanal 36 in Drehachsenrichtung verläuft. Von diesem zentralen Verbindungskanal 36 zweigen eine Reihe von Abzweigkanälen 43, 44, 45, 46 und 47 sowie 68 ab. Der zylindrische Innenkörper 35 ist entweder in einer entsprechenden Öffnung im Vorrichtungsgehäuse 21 oder in einem dort angeordneten Außenkörper 35, siehe Figur 3, drehbar gelagert. Im Vorrichtungsgehäuse 21 und gegebenenfalls Außenkörper 34 sind entsprechende Aus- und Eingänge 41, 42, 38, 39 angeordnet, von denen sich entsprechende Kanäle 32, 48, 9, 10 sowie 49 erstrecken.

In der in Figur 4 dargestellten Drehstellung des zylindrischen Innenkörpers 35.ist der Abzweigkanal 37 mit dem Zuführkanal 32, der Abzweigkanal 49 mit dem Abgabekanal 10 und der Abzweigkanal 68 ist mit der Seitenöffnung beziehungsweise dem Seitenkanal 9 verbunden. Dadurch kann direkt vom Extruder 4 und von der Sammeleinrichtung 15 Schmelze einem Werkzeug 5 zugeführt werden. Es sind weitere Drehstellungen möglich, in denen beispielsweise der Extruder 4 mit den Kanälen 48, 49 verbunden ist, die zu entsprechenden Mischeinrichtungen führen. Schließlich können in einer noch weiteren Drehstellung die beiden Mischeinrichtungen über Kanäle 48, 49 und die Abzweigkanäle 45, 46 über den weiteren Abzweigkanal 44 mit dem Formwerkzeug 5 verbunden werden.

Es sind selbstverständlich weitere Abzweigkanäle möglich, die beispielsweise eine Verbindung nur zwischen Speichereinrichtung und Formwerkzeug 5, zwischen Extruder und Formwerkzeug oder dergleichen herstellen.

In Figur 5 ist ein Schnitt ähnlich zu den Figuren 1 und 3 durch ein weiteres Ausführungsbeispiel der erfindungsgemäßen Aufschäummittelbeladungs- und Mischvorrichtung dargestellt.

Dieses Ausführungsbeispiel zeigt insbesondere eine Lagerung einer Mischerwelle 18 an ihren beiden Enden 51, 52. Die Mischerwelle 18 ist in dem Vorrichtungsgehäuse 21 in einem entsprechenden zylindrischen Körper oder zylindrischen Öffnung koaxial zu dieser gelagert. Auf der Mischerwelle sind eine Anzahl von Mischelementen 19 angeordnet, die sich radial nach außen erstrecken. Die Mischerwelle kann auch eine Schneckengeometrie aufweisen. Benachbart zu beiden Enden 51, 52 der Mischerwelle 18 sind zwei Seitenöffnungen 9 angeordnet, über welche jeweils Schmelze der Mischerwelle 18 zuführbar ist. Die Schmelze ist von einem Extruder 5 beiden Seitenöffnungen 9 gleichzeitig zuführbar.

Benachbart zu jeder der Seitenöffnungen 9 ist eine Eintrittsbohrung 6 zur Zufuhr von insbesondere flüssigem Aufschäummittel zur Schmelze angeordnet. Analog zu Figur 2 können jeweils zwei dieser Eintrittsbohrungen insbesondere diametral gegenüberliegend angeordnet sein. Die Eintrittsbohrungen können alle von einer Aufschäummitteldosiereinrichtung versorgt werden. Im Bereich der Eintrittsbohrungen 6 sind auf der Mischerwelle 18 entsprechende Schließorgane angeordnet, die ebenfalls Teil der Mischeinrichtung sein können.

Zwischen den beiden Seitenöffnungen 9 als Schmelzeintritte ist im wesentlichen mittig ein Schmelzaustritt 48, 49 angeordnet. Von diesem ist die Schmelze, siehe Figur 4, der Wegeumschalteinrichtung zuführbar.

Es sei angemerkt, dass statt der einen Mischerwelle nach Figur 5 auch entsprechend zwei Mischerwellen angeordnet sein können. Jede dieser Mischerwellen ist aufgrund der doppelten Zufuhr von Schmelze und der beidendigen Lagerung nur geringen Kräften in axialer Richtung ausgesetzt, da sich die Drücke innerhalb der Schmelze durch die doppelte Zuführung weitestgehend kompensieren.

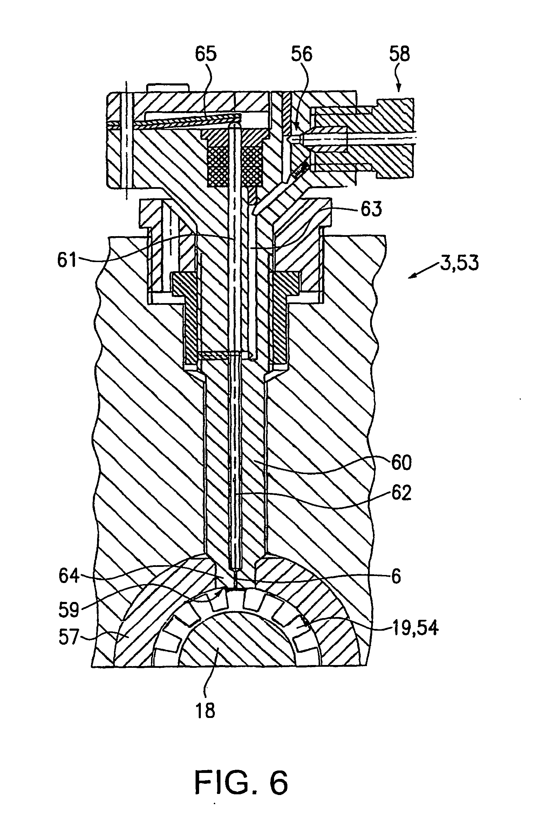

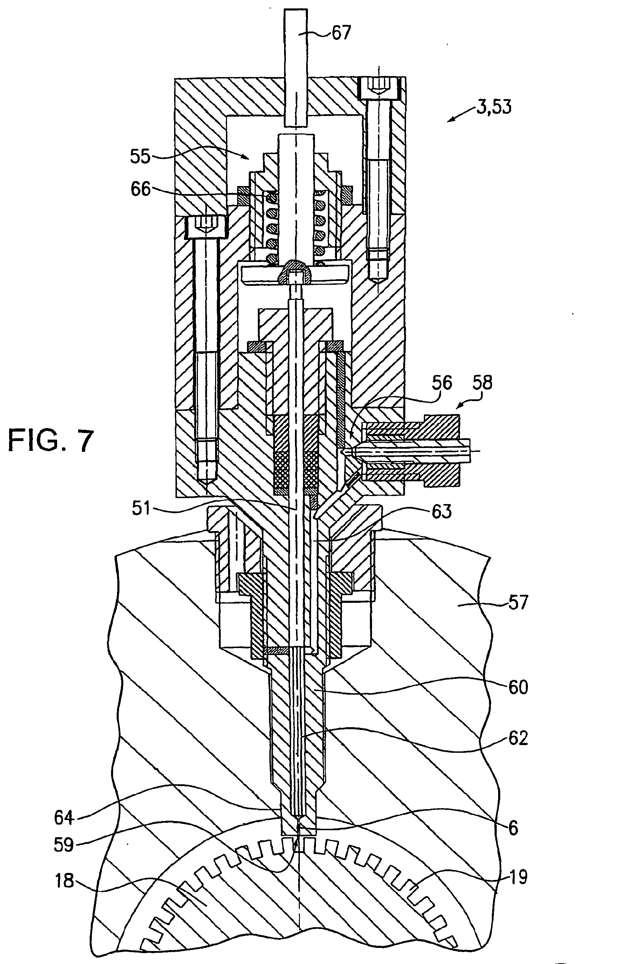

In den Figuren 6 und 7 sind zwei unterschiedliche Ausführungsbeispiele für ein Einspritzventil 53 als Teil der Aufschäummitteldosiereinrichtung 3 dargestellt.

Das Einspritzventil 53 ist radial zur Mischerwelle 18 an dem Gehäuse 21 angeordnet. Es endet benachbart zu den Mischelementen 19 beziehungsweise Schließorgan 54 mit einer Endfläche 59. Im Bereich dieser Endfläche 59 ist zumindest eine Eintrittsbohrung 6 angeordnet, die jeweils durch das entsprechende Schließorgan 54 beziehungsweise Mischelement 19 verschlossen und zwischen zwei solchen Elementen 19 geöffnet ist. Die Eintrittsbohrung 6 ist in einem unteren Ende 64 eines Einspritzzylinders 60 des Ventils 53 angeordnet. In dem Einspritzzylinder 60 ist ein Portionierkanal 62 ausgebildet, der mit der Eintrittsöffnung 6 endet. Die Eintrittsöffnung 6 hat einen geringeren Durchmesser als der Portionierkanal 62. In dem Portionierkanal 62 ist ein Einspritzkolben 61 längsverschieblich gelagert. An seinem der Eintrittsöffnung 6 gegenüberliegenden Ende ist eine Rückschlagklappe 65 mit dem Einspritzkolben 61 in Anlage.

In dem Einspritzzylinder 60 ist parallel zum Einspritzkolben 61 beziehungsweise zum Portionierkanal 62 ein Zuführkanal 63 angeordnet, der radial in den Portionierkanal 62 mündet und an seinem anderen Ende eine Aufschäummitteleinspeisstelle 56 aufweist. Dort ist an dem Ventil ein Einspeiseanschluss 58 lösbar befestigt, über den insbesondere flüssiges CO₂ zuführbar ist.

In Figur 7 ist in einem analogen Längsschnitt zu Figur 3 ein weiteres Einspritzventil 53 dargestellt. Dieses unterscheidet sich von dem Ausführungsbeispiel nach Figur 6 insbesondere durch die Betätigung des Einspritzkolbens 61, der nach Figur 7 Teil einer Kolbenpumpe 55 ist. Dieser ist eine lineare Antriebseinrichtung zugeordnet und die Position des Einspritzkolbens 61 ist über ein entsprechendes Messsystem bestimmbar. Statt einer Kraftbeaufschlagung durch eine Rückschlagklappe 65 ist in Figur 7 eine Rückschlagfeder 66 angeordnet, die den Einspritzkolben 61 in Richtung Eintrittsöffnung 6 drückt.

Bei dem Ausführungsbeispiel nach Figur 7 steht außerdem das untere Ende 64 teilweise in einen die Mischwelle 18 umgebenden Mischraum vor und ein zylindrischer Körper 57 nach Figur 6 ist in Figur 7 nicht als separater Körper ausgebildet, sondern insgesamt ist das Vorrichtungsgehäuse als ein solcher zylindrischer Körper 57 ausgebildet.

Um den Hub des Einspritzkolbens 61 zu begrenzen, weist das Einspritzventil 53 nach Figur 7 ein Anlageelement 67 auf. Dieses ist dem der Eintrittsöffnung 6 gegenüberliegenden Ende des Einspritzkolbens 61 zugeordnet. Weiterhin ist der Einspritzkolben 61 nach Figur 7 mehrteilig ausgebildet, wobei ein in etwa stiftförmiger Einspritzkolben 61 an seinem oberen Ende an einem umgekehrt T-förmigen Kolben lösbar befestigt ist. Dieser umgekehrt T-förmige Kolben wird von der Rückschlagfeder 66 beaufschlagt.

Im Folgenden wird kurz die Funktionsweise der erfindungsgemäßen Vorrichtung anhand der Figuren geschildert.

Gemäß der erfindungsgemäßen Aufschäummittelbeladungs- und Mischvorrichtung kann einer Kunststoffschmelze flüssiges und insbesondere aktiv gekühltes Aufschäummittel wie CO₂, sowohl bei einem diskontinuierlichen Extrusionsblasformprozess als auch bei kontinuierlichen Prozessen zugeführt werden. Die Verfahrensschritte Gasdosierung, Verteilung des Gases in der Kunststoffschmelze, Lösen des Gases in der Schmelze und Entspannung erfolgen in dem Vorrichtungsmodul 1, das auch für übliche Kunststoffmaschinen nachrüstbar ist und beispielsweise am Ende des Plastifizierers anflanschbar ist.

Zum Dosieren und Einmischen des Aufschäummittels wird das Verschlussventil 12 geschlossen und die Plastifizierschnecke 25 fördert Kunststoffschmelze über die Rückschlagklappe 14 zur Mischeinrichtung 2. Dort wird im Bereich der Kanalverbindung 17 und insbesondere benachbart zur Seitenöffnung 9 Aufschäummittel zudosiert, siehe Fig. 2. Die Dosierung erfolgt pulsierend, da von den in Fig. 2 dargestellten Eintrittsbohrungen 6, 22 jeweils eine durch Mischelemente 19 bzw. Schließelemente 20 freigegeben und die andere verschlossen ist Anschließend oder auch gleichzeitig erfolgt das Einmischen des Aufschäummittels.

Die begaste und bemischte Kunststoffschmelze kann in die Speichereinrichtung 15 über den Durchlass 27 eintreten. Entsprechend zum gewünschten Diffusionsdruck ist der Kolben 28 gebremst ausschiebbar. Das eingemischte Aufschäummittel wird in der Kunststoffschmelze unter Druck gelöst. Übliche Drücke und Temperaturen sind in diesem Zusammenhang ca. 150°C - 350°C und ca. 200 - 400 bar.

Nach Lösen des Aufschäummittels in der Kunststoffschmelze wird das Verschlussventil 12 geöffnet und die Kunststoffschmelze aus der Sammeleinrichtung 15 herausgedrückt. Dabei kann Kunststoffschmelze nochmals durch die Mischeinrichtung 2 geführt und dort nachverrnischt werden. Je nach Wunsch kann weiteres Aufschäummittel zugesetzt werden oder die Aufschäummitteldosiereinrichtung 3 ist außer Funktion. Die Verbindung zwischen Kanalverbindung 17 und Extruder 4 ist durch selbsttätiges Schließen der Rückschlagklappe 14 verschlossen. Die Kunststoffschmelze tritt über das geöffnete Verschlussventil 12 in das Formwerkzeug 5 aus, entspannt sich dort und schäumt auf. Über die Drossel kann ein hoher Druck gradient (bar/sek) erzeugt werden, der die Schaumqualität begünstigt. Der Schaum kann als kleinzellular charakterisiert werden, wobei eine durchschnittliche Zellgröße im Bereich von 100 - 500µm vorliegen kann.

Gleichzeitig oder zeitlich versetzt zum Austragen der Kunststoffschmelze aus der Sammeleinrichtung 15 in das Formwerkzeug 5 kann durch entsprechende Steuerung der Extruderschnecke 25 über die Rückschlagklappe 14 unbeladende und damit nicht aufschäumbare Kunststoffschmelze zugeführt werden. Dadurch ist eine Zweikomponenten-Fahrweise der Aufschäummittelbeladungs- und Mischvorrichtung 1 möglich.

Die erfindungsgemäße Vorrichtung ist kompatibel zu allen üblichen Kunststoffmaschinen, und weist eine kurze Baulänge auf. Es ist eine Zweikomponenten-Fahrweise sowohl zeitlich hintereinander als auch gleichzeitig möglich. Der Mischvorgang mittels der Mischeinrichtung 2 erfolgt unabhängig vom Extruder und ein Diffusionsdruck in der Kunststoffschmelze ist unabhängig vom Druck vor der Extruderschnecke 25. Die Dosierung des Aufschäummittels erfolgt pulsierend und ist exakt dosierbar. Weiterhin ist ein doppelter Mischvorgang gegeben, wobei die Kunststoffschmelze einmal bei Transport in Richtung Speichereinrichtung 15 und ein zweites Mal beim Transport von der Speichereinrichtung in Richtung Formwerkzeug 5 gemischt wird.

Das zweite Ausführungsbeispiel nach Figur 3 arbeitet im wesentlichen analog zum ersten Ausführungsbeispiel. Ein Unterschied ist insbesondere darin zu sehen, dass eine Zweikomponentenfahrweise durch die Wegeumschalteinrichtung 33 in einfacher Weise durchführbar ist. Bei der Stellung der Wegeumschalteinrichtung nach Figur 3 erfolgt eine Zufuhr von plastifiziertem Kunststoffmaterial mit zugemischtem und gelöstem Aufschäummittel zum Formwerkzeug 5 direkt von der Sammeleinrichtung 15. Eine Verbindung des Formwerkzeugs 5 in Richtung Mischeinrichtung 12 beziehungsweise Extruder 4 ist unterbrochen.

In einer weiteren Stellung der Wegeumschalteinrichtung 33 verbindet die Bohrung 36 Abgabeöffnung 10 mit Seitenöffnung 9, so dass direkt plastifiziertes Kunststoffmaterial über Rückschlagventil 31 vom Extruder über dessen Abgabeende 8 dem Formwerkzeug 5 zuführbar ist.

Zusammenfassend ergibt sich, dass gemäß vorliegender Erfindung die zusammen mit dem geschilderten Stand der Technik auftretenden Nachteile ausgeräumt sind. Insbesondere sei auf die folgenden erfindungsgemäßen Aspekte hingewiesen:
(1) Zusetzen des Aufschäum- oder Treibmittel in die Schmelze stromabwärts und in einer getrennten Einrichtung zur Plastifizierschnecke, wo die Schmelze erzeugt wird. Folglich wird ein im Stand der Technik vorhandenes Verschmutzungsproblem, wie es oben angesprochen ist, vermieden und die Mischfunktion kann optimiert werden, da sie getrennt gesteuert wird.
(2) Das Aufschäummittel wird bei einem bevorzugten Ausführungsbeispiel als Flüssigkeit zugesetzt. Teure Ausrüstungen zur Herstellung eines superkritischen Gases werden vermieden. Das heißt, das Treibmittel wird einfach von einer bekannten, unter Druck stehenden Flasche zugesetzt. Die Flasche ist mit einer bekannten Pumpe verbunden, die wiederum entsprechend zu Figur 7 mit der restlichen Anordnung verbunden ist. Durch die Pumpe wird unter Druck stehendes Fluid der Zahnradpumpe 8 zugeführt. Vorzugsweise ist das Treib- oder Aufschäummittel CO₂ ,das Eigenschaften hat, die es ihm erlauben, im flüssigen Zustand zu bleiben, wenn es der Mischkammer zugesetzt wird, wobei es eine gute Löslichkeit innerhalb der Schmelze als superkritisches Fluid hat. Weiterhin ist dieses Treibmittel nicht umweltverschmutzend. Wie oben bereits angemerkt, ist es wünschenswert, das Treibmittel im flüssigen Zustand bis zum Einführen in die Schmelze in der Mischkammer zu halten und es ist möglich, eine Wasserkühleinrichtung im Lager 24 vorzusehen, auch wenn eine solche bei CO₂ nicht notwendig ist.
(3) Die Knet- oder Mischelemente sind insbesondere effektiv zur Erzeugung einer Lösung von Schmelze und Treibmittel innerhalb einer Zykluszeit erforderlich bei einer Einspritzvorrichtung.

Ohne weiter auf Theorien der Erfindung zum Erhalt eines aufgeschäumten Kunststoffs einzugehen, wurde festgestellt, dass durch Verwendung des Treibmittels in flüssiger Form dieses genau zudosierbar ist. Die Zudosierung erfolgt dabei beispielsweise über eine Zahnradpumpe mit festem Fluidvolumen zwischen den einzelnen Zähnen. Die Drehung der Zahnradpumpe erzeugt dann diskrete Volumen des Treibmittels bei einem höheren Druck als die Schmelze, so dass das Treibmittel in die Schmelze eindringt. Das Liquid erfordert keine Öffnungen für das Treibmittel zum Eindringen in die Schmelze und ein Verstopfen ist daher kein Problem. Die diskreten Volumen bilden Tröpfchen des Treibmittels innerhalb der Schmelze und diese reduzieren sich progressiv in der Größe bei der Vorbeiführung an den Mischelementen und bilden eine Lösung mit der Schmelze. Im Vergleich zu dem oben beschriebenen Stand der Technik besteht die Möglichkeit, dass die Tröpfchen aus Treibmittel gemäß vorliegender Erfindung bei Einführen in die Schmelze größer sind als Tröpfchen aus superkritischem Gas, das durch Öffnungen nach Stand der Technik eingespritzt wurde. Dies kann einen Unterschied zwischen den beiden Konzepten erklären, nachdem gemäß vorliegender Erfindung keine Zellen von weniger als 50 µm in der Regel erzeugt werden. Allerdings lösen die Knetelemente der Mischeinrichtung gemäß vorliegender Erfindung das Treibmittel in der Schmelze und Erzeugen hervorragende geformte Schaumteile. Es kann in diesem Zusammenhang noch wichtiger sein, dass aufgrund der Anordnung der Mischelemente die Vermischung von Treibmittel und Schmelze in einem relativ kurzen Zeitraum erfolgen kann, aber nicht bei der vollen Sättigung der Schmelze. Die Zykluszeiten, gleich denen der bekannten Einspritzvorrichtung, gestatten nicht nur eine volle Lösung der maximalen Lösung von CO₂, sondern gestatten eine geringere Konzentration des Treibmittels, die allerdings mehr als ausreichend ist, um die Bildung von geschäumten Kunststoffen mit Zellgrößen von ungefähr 50 bis 400 µm bei Dichten von 10⁵ Zellen pro Kubikzentimeter. Die Verwendung einer separaten Mischkammer ist insbesondere von Vorteil bei dem bevorzugten Ausführungsbeispiel, welches CO₂ als Treibmittel verwendet, auch in Kombination mit der Zahnradpumpe, die flüssiges Treibmittel nicht im superkritischen Zustand in den zur Mischkammer führenden Weg bringt, in dem die Mischelemente 19 nach Figur 5 und 1 angeordnet sind.

Signifikanterweise kann die Vorrichtung leicht so gesteuert werden, dass ein erwünschter Sättigungsgrad des Treibmittels innerhalb der Schmelze zeitgesteuert auftritt. Das Steuersystem der Einspritzvorrichtung ist ein Mikroprozessorsystem, das einen weiten Bereich zusätzlicher Funktionen, wie beispielsweise automatische Formwerkzeugauswurffunktion, kontrollieren kann. Die Drehung der Zahnradpumpe kann leicht zeitlich mit dem Einspritzen der Schmelze (während des Einspritzvorschubs des hin- und herbeweglichen Extruders) angepasst werden, um eine feste Menge des Treibmittels der Schmelze pulsend zuzuführen. Eine Einführung von überschüssigem Treibmittel, das nicht in Lösung mit der Schmelze ist oder in anderer Weise in das Formwerkzeug eingespritzt wird, wodurch defekte Formteile erzeugt werden, ist vermieden. Die Drehung der Mischelemente kann gesteuert werden, zum Lösen des Treibmittels oder zur Bildung einer Lösung mit der Schmelze. Die Shot-Pot-Einspritzung kann unabhängig gesteuert werden. Für einen minimalen Takt kann der Shot-Pot einspritzen, während die Schnecke sich zurückzieht oder das nächste Einspritzen vorbereitet. Dies ist allerdings nicht notwendig. All dies kann in existierende Steuersysteme implementiert werden, so dass nicht nur bekannte Einspritzeinheiten verwendbar sind, sondern auch bekannte Steuersysteme für solche Maschinen das Verfahren mit minimaler Zykluszeit steuern können.

Schließlich sei noch angemerkt, dass bei der Tätigkeit der Mischvorrichtung der Zustand der Mischung relativ konstant bleibt. Heizelemente (nicht dargestellt) können und sind bei der Mischstation vorgesehen, aber die Temperatur der Schmelze/Treibmittel-Mischung wird allgemein konstant durch die Mischstation, den Shot-Pot und die Einspritzpassage zum Formwerkzeug gehalten. Allgemein ist die Funktion der Mischstation die Erzeugung einer erwünschten Konzentration des Treibmittels in Lösung mit der Schmelze und ein Aufrechterhalten der Lösung ohne jegliche Änderungen bis die Lösung in das Formwerkzeug eingespritzt wird. Wenn und beim Eintreten der Mischung in das Formwerkzeug werden schnell viele Bläschen gebildet und diese expandieren auf die oben beschriebene Zellgröße. Die in der Mischstation programmierten Variablen sind Einspritzdruck und Zykluszeit.

## Patentansprüche

1. Aufschäummittelbeladungs- und Mischvorrichtung (1) mit wenigstens einer Mischeinrichtung (2) und einer Aufschäummitteldosiereinrichtung (3), wobei die Aufschäummittelbeladungs- und Mischvorrichtung (1) zwischen einem Plastifizierer (4) und einem
Formwerkzeug (5) anordbar ist,
**dadurch gekennzeichnet,**
**dass** die Aufschäummitteldosiereinrichtung (3) zur Zufuhr von Aufschäummittel zur Kunststoffschmelze alternierend geöffnet und geschlossen ist.

2. Aufschäummittelbeladungs- und Mischvorrichtung nach Anspruch 1,
**dadurch gekennzeichnet,**
**dass** der Mischeinrichtung ein Schließorgan (19, 54) zum altemierenden Öffnen und Schließen der Aufschäummitteldosiereinrichtung (3) zugeordnet ist.

3. Aufschäummittelbeladungs- und Mischvorrichtung nach einem der vorangehenden Ansprüche,
**dadurch gekennzeichnet,**
**dass** die Aufschäummittelbeladungs- und Mischvorrichtung als Modul ausgebildet ist, das lösbar zwischen Plastifizierer (4) und Formwerkzeug (5) anordbar ist.

4. Aufschäummittelbeladungs- und Mischvorrichtung nach einem der vorangehenden Ansprüche,
**dadurch gekennzeichnet,**
**dass** die Aufschäummitteldosiereinrichtung (3) wenigstens zwei in einem Vorrichtungsgehäuse (21) mündende Eintrittsbohrungen (6, 22) aufweist, die durch die Mischeinrichtung (2) wechselseitig geöffnet und geschlossen sind.

5. Aufschäummittelbeladungs- und Mischvonichtung nach einem der vorangehenden Ansprüche,
**dadurch gekennzeichnet,**
**dass** die Aufschäummittelbeladungs- und Mischvorrichtung sich quer zur Längsrichtung (7) des Plastifizierers (4) erstreckt und im Vorrichtungsgehäuse (21) ein mit einem Abgabeende (8) des Plastifizierers (4) verbindbare Seitenöffnungen (9) ausgebildet ist.

6. Aufschäummittelbeladungs- und Mischvorrichtung nach einem der vorangehenden Ansprüche,
**dadurch gekennzeichnet,**
**dass** das Vorrichtungsgehäuse (21) wenigstens eine Sammeleinrichtung (15) für Kunststoffschmelze aufweist.

7. Aufschäummittelbeladungs- und Mischvorrichtung nach einem der vorangehenden Ansprüche,
**dadurch gekennzeichnet, dass** die Sammeleinrichtung (15) am Vorrichtungsgehäuse (21) lösbar befestigt ist, wobei die Sammeleinrichtung (15) vorzugsweise eine Kolben-Zylinder-Einheit (16) ist.

8. Aufschäummittelbeladungs- und Mischvorrichtung nach einem der vorangehenden Ansprüche,
**dadurch gekennzeichnet, dass** eine Kanalverbindung (17) zwischen Seitenöffnung (9) und Sammeleinrichtung (15) und/oder zwischen Abgabeöffnung (10) und Sammeleinrichtung (15) ausgebildet ist, wobei in der Kanalverbindung (17) die Mischeinrichtung (2) angeordnet ist.

9. Aufschäummittelbeladungs- und Mischvorrichtung nach einem der vorangehenden Ansprüche,
**dadurch gekennzeichnet, dass** die Mischeinrichtung (2) wenigstens eine Mischerwelle (18) und von dieser nach außen abstehende Mischelemente (19) aufweist.

10. Aufschäummittelbeladungs- und Mischvorrichtung nach einem der vorangehenden Ansprüche,
**dadurch gekennzeichnet, dass** durch Mischelemente (19) und/oder von der Mischerwelle (18) nach außen abstehende Schließelemente (20) bei Drehung der Mischerwelle (18) die Aufschäummitteldosiereinrichtung (3) verschließbar ist.

11. Aufschäummittelbeladungs- und Mischvorrichtung nach einem der vorangehenden Ansprüche,
**dadurch gekennzeichnet, dass** im Vorrichtungsgehäuse (21) eine Wegeumschalteinrichtung (33) angeordnet ist, die zwischen einer Zuführung direkt vom Extruder (4) oder von der Sammeleinrichtung (15) zum Formwerkzeug (5) umschaltbar ist.

12. Aufschäummittelbeladungs- und Mischvorrichtung nach einem der vorangehenden Ansprüche,
**dadurch gekennzeichnet,**
**dass** der Aufschäummitteldosiereinrichtung (3) eine Kühleinrichtung zugeordnet ist, wobei der Kolbenpumpe (55) ein Linearantrieb insbesondere mit integriertem Wegmeßsystem zugeordnet ist.

13. Aufschäummittelbeladungs- und Mischvorrichtung nach einem der vorangehenden Ansprüche,
**dadurch gekennzeichnet,**
**dass** die Wegeumschalteinrichtung (33) einen Außen- und einen in diesem drehbar gelagerten Innenkörper (34, 35) aufweist, wobei ein Ausgang (37) des Außenkörpers (34) mit jeweils einem von wenigstens zwei Eingängen (38, 39) des Außenkörpers durch einen insbesondere exzentrisch im Innenkörper (35) angeordneten Verbindungskanal (36) verbindbar ist.

14. Aufschäummittelbeladungs- und Mischvorrichtung nach einem der vorangehenden Ansprüche,

15. Einspritzvorrichtung zum Formen geschäumten Kunststoffs mit einer Aufschäummittelbeladungs- und Mischvorrichtung (1) nach wenigstens einem der vorangehenden Ansprüche, wobei der Plastifizierer (4) als Inline hin- und herbewegliche Plastifizierschnecke (4) ausgebildet ist,
**dadurch gekennzeichnet,**
**dass** die Mischeinrichtung (2) einen ersten Einlass (14) in Fluidverbindung mit der Plastifizierschnecke (4) und einen Auslass (10) in Fluidverbindung mit dem Formwerkzeug (5) über ein Absperrventil (12) und einen zweiten Einlass (6) und/oder (22) aufweist, sowie die Aufschäummitteldosiereinrichtung (3) als Abmesseinrichtung zum Pulsen des Aufschäum- oder Treibmittels in den zweiten Einlass, wenn die Plastifizierschnecke sich axial zum Einspritzen einer Menge von Kunststoff in eine Mischkammer der Mischeinrichtung (2) bewegt.
**dadurch gekennzeichnet,**
**dass** der Verbindungskanal (36) im wesentlichen entlang einer Drehachse des zylindrischen Innenkörpers (35) verläuft und eine Anzahl von Abzweigekanälen (45, 46, 47, 49, 68) aufweist, denen durch Drehung des Innenkörpers zumindest zwei Ausgänge und/oder Eingänge im Außenkörper (34) zuordbar sind.

16. Einspritzvorrichtung nach Anspruch 15,
**dadurch gekennzeichnet,**
**dass** die Abmesseinrichtung (3) Knetelemente (19) zum in Lösung bringen des Treibmittels mit der Schmelze aufweist.

## Claims

1. A foaming agent charging and mixing device (1), comprising at least one mixing means (2) and one foaming agent metering means (3), wherein the foaming agent charging and mixing device (1) is adapted to be arranged between a plasticating screw (4) and a mold (5),
**characterized in that**
the foaming agent metering means (3) is altemately opened and closed for supplying foaming agent to the plastic melt.

2. A foaming agent charging and mixing device according to claim 1,
**characterized in that**
a closing member (19, 54) for alternately opening and closing the foaming agent metering means (3) is assigned to the mixing means.

3. A foaming agent charging and mixing device as claimed in one of the preceding claims,
**characterized in that**
the foaming agent charging and mixing device is formed as a module, which is adapted to be arranged releasably between the plasticating screw (4) and the mold (5).

4. A foaming agent charging and mixing device as claimed in one of the preceding claims,
**characterized In that**
the foaming agent metering means (3) comprises at least two inlet bores (6, 22) opening into a device housing (21), said bores being reciprocally opened and closed by the mixing means (2).

5. A foaming agent charging and mixing device as claimed in one of the preceding claims,
**characterized in that**
the foaming agent charging and mixing device extends transversely to the longitudinal direction (7) of the plasticating screw (4), and side openings (9) connectable to a discharge end (8) of the plasticating screw (4) are formed in the device housing (21).

6. A foaming agent charging and mixing device as claimed in one of the preceding claims,
**characterized in that**
the device housing (21) comprises at least one collection means (15) for plastic melt.

7. A foaming agent charging and mixing device as claimed in one of the preceding claims,
**characterized in that**
the collection means (15) is releasably attached to the device housing (21), wherein the collection means (15) is preferably a piston-cylinder unit (16).

8. A foaming agent charging and mixing device as claimed in one of the preceding claims,
**characterized in that**
a channel connection (17) is formed between the side opening (9) and the collection means (15) and/or between the discharge opening (10) and the collections means (15), wherein the mixing means (2) is arranged in the channel connection (17).

9. A foaming agent charging and mixing device as claimed in one of the preceding claims,
**characterized in that**
the mixing means (2) comprises at least one mixing shaft (18) and mixing elements (19) outwardly projecting therefrom.

10. A foaming agent charging and mixing device as claimed in one of the preceding claims,
**characterized in that**
the foaming agent metering means (3) can be closed by mixing elements (19) and/or closing elements (20) outwardly projecting from the mixing shaft (18) upon rotation of the mixing shaft (18).

11. A foaming agent charging and mixing device as claimed in one of the preceding claims,
**characterized in that**
a directional switching means (33) is arranged in the device housing (21), said directional switching means being switchable between a supply directly from the extruder (4) or the collection means (15) to the mold (5).

12. A foaming agent charging and mixing device as claimed in one of the preceding claims,
**characterized in that**
the foaming agent metering means (3) comprises a cooling means, wherein a linear drive in particular having an integrated path measuring system is associated to the reciprocating pump (55).

13. A foaming agent charging and mixing device as claimed in one of the preceding claims,
**characterized in that**
the directional switching means (33) comprises an external body and an internal body (34, 35) rotatably supported therein, wherein an outlet (37) of the extemal body (34) is connectable to at least one of two inlets (38, 39) of the extemal body by a connection channel (36) arranged in particular eccentrically in the internal body (35).

14. A foaming agent charging and mixing device as claimed in one of the preceding claims,
**characterized in that**
the connection channel (36) extends substantially along an axis of rotation of the cylindrical internal body (35) and comprises a number of branching channels (45, 46, 47, 49, 68), to which at least two outlets and/or inlets in the extemal body (34) can be assigned by rotation of the internal body.

15. An injection molding machine for molding foamed plastics with a foaming agent charging and mixing device (1) according to at least one of the preceding claims, the plasticating screw (4) being configured as an inline reciprocating plasticating screw (4),
**characterized in that**
the mixing device (2) has a first inlet (14) in fluid communication with the plasticating screw (4) and an outlet (10) in fluid communication with the mold (5) through a shut-off valve (12) and a second inlet (6) and/or (22), and a foaming-agent metering means (3) as a metering means for pulsing the foaming or blowing agent into the second inlet when the plasticating screw is axially moving to inject a set quantity of plastic into a mixing chamber of the mixing means (2).

16. An injection molding machine of claim 15,
**characterized in that**
the metering means (3) has kneading elements (19) for mixing the blowing agent into solution with the melt.

## Revendications

1. Dispositif de chargement et de mélange d'agent moussant (1) comprenant au moins un mélangeur (2) et un doseur d'agent moussant (3), le dispositif de chargement et de mélange d'agent moussant (1) pouvant être disposé entre un dispositif de plastification (4) et un outil de formage (5), **caractérisé en ce que** le doseur d'agent moussant (3) pour amener l'agent moussant dans la matière plastique fondue est ouvert et fermé en alternance.

2. Dispositif de chargement et de mélange d'agent moussant selon la revendication 1, **caractérisé en ce qu'**un organe de fermeture (19, 54) pour l'ouverture et la fermeture alternées du doseur d'agent moussant (3) est associé au mélangeur.

3. Dispositif de chargement et de mélange d'agent moussant selon l'une des revendications précédentes, **caractérisé en ce qu'**il est conçu comme un module qui peut être disposé de manière amovible entre le dispositif de plastification (4) et l'outil de formage (5).

4. Dispositif de chargement et de mélange d'agent moussant selon l'une des revendications précédentes, **caractérisé en ce que** le doseur d'agent moussant (3) présente au moins deux perçages d'entrée (6, 22) qui débouchent dans une enveloppe de dispositif (21) et qui sont alternativement ouverts et fermés par le mélangeur (2) .

5. Dispositif de chargement et de mélange d'agent moussant selon l'une des revendications précédentes, **caractérisé en ce qu'**il s'étend transversalement par rapport au sens longitudinal (7) du dispositif de plastification (4), et il est prévu dans l'enveloppe de dispositif (21) une ouverture latérale (9) qui est apte à être reliée à une extrémité de sortie (8) du dispositif de plastification (4).

6. Dispositif de chargement et de mélange d'agent moussant selon l'une des revendications précédentes, **caractérisé en ce que** l'enveloppe de dispositif (21) comporte au moins un collecteur (15) pour la matière plastique fondue.

7. Dispositif de chargement et de mélange d'agent moussant selon l'une des revendications précédentes, **caractérisé en ce que** le collecteur (15) est fixé de manière amovible à l'enveloppe de dispositif (21), le collecteur (15) étant constitué de préférence par une unité piston-cylindre (16).

8. Dispositif de chargement et de mélange d'agent moussant selon l'une des revendications précédentes, **caractérisé en ce qu'**il est prévu un conduit de liaison (17) entre les ouvertures latérales (9) et le collecteur (15) et/ou entre l'ouverture de sortie (10) et le collecteur (15), le mélangeur (2) étant disposé dans le conduit de liaison (17).

9. Dispositif de chargement et de mélange d'agent moussant selon l'une des revendications précédentes, **caractérisé en ce que** le mélangeur (2) comporte au moins un arbre mélangeur (18) et des éléments mélangeurs (19) qui dépassent de celui-ci vers l'extérieur.

10. Dispositif de chargement et de mélange d'agent moussant selon l'une des revendications précédentes, **caractérisé en ce que** grâce aux éléments mélangeurs (19) et/ou à des éléments de fermeture (20) qui dépassent de l'arbre mélangeur (18) vers l'extérieur, le doseur d'agent moussant (3) est apte à être fermé lors de la rotation de l'arbre mélangeur (18).

11. Dispositif de chargement et de mélange d'agent moussant selon l'une des revendications précédentes, **caractérisé en ce qu'**il est prévu dans l'enveloppe de dispositif (21) un dispositif de commutation (33) qui est apte à être manoeuvré entre une amenée directe de l'extrudeuse (4) vers l'outil de formage (5) et une amenée du collecteur (15) vers l'outil de formage (5).

12. Dispositif de chargement et de mélange d'agent moussant selon l'une des revendications précédentes, **caractérisé en ce qu'**un refroidisseur est associé au doseur d'agent moussant (3), un entraînement linéaire en particulier avec un système de mesure de déplacement intégré étant associé à la pompe à piston (55).

13. Dispositif de chargement et de mélange d'agent moussant selon l'une des revendications précédentes, **caractérisé en ce que** le dispositif de commutation (33) comporte un corps extérieur (34) et un corps intérieur (35) monté en rotation dans celui-ci, une sortie (37) du corps extérieur (34) étant apte à être reliée à l'une des deux entrées (38, 39) ou plus du corps extérieur grâce à un conduit de liaison (36) disposé de manière excentrée, en particulier, dans le corps intérieur (35).

14. Dispositif de chargement et de mélange d'agent moussant selon l'une des revendications précédentes, **caractérisé en ce que** le conduit de liaison (36) s'étend sensiblement le long d'un axe de rotation du corps intérieur cylindrique (35) et présente un certain nombre de conduits de dérivation (45, 46, 47, 49, 68) auxquels au moins deux sorties et/ou entrées prévues dans le corps extérieur (34) peuvent être associées grâce à la rotation du corps intérieur.

15. Dispositif d'injection pour former une matière plastique expansée à l'aide d'un dispositif de chargement et de mélange d'agent moussant (1) selon l'une au moins des revendications précédentes, le dispositif de plastification (4) étant conçu comme une vis de plastification en ligne à va-et-vient (4), **caractérisé en ce que** le mélangeur (2) a une première admission (14) en communication de fluide avec la vis de plastification (4), une sortie (10) en communication de fluide avec l'outil de formage (5) par l'intermédiaire d'une soupape d'arrêt (12) et une seconde admission (6) et/ou (22), ainsi que le doseur d'agent moussant (3) comme dispositif de mesure pour amener de manière pulsée l'agent moussant ou l'agent d'expansion dans la seconde admission quand la vis de plastification se déplace axialement pour injecter une quantité de matière plastique dans une chambre de mélange du mélangeur (2).

16. Dispositif d'injection selon la revendication 15, **caractérisé en ce que** le dispositif de mesure (3) comporte des éléments malaxeurs (19) pour dissoudre l'agent d'expansion dans la matière fondue.
